# EUROPEAN PATENT SPECIFICATION

(11) **EP 0 472 973 B1**
(45) Date of publication and mention of the grant of the patent: **03.05.1995**
(21) Application number: 91113296.7
(22) Date of filing: 08.08.1991
(51) Int. Cl.: B27K 3/50

(54) **Water-borne treatment compositions for porous substrates**
Wässrige Zusammensetzungen zur Behandlung von porösen Substraten
Compositions aqueuses pour le traitement des substrats poreux

(30) Priority: 14.08.1990 US 567036
(43) Date of publication of application: 04.03.1992
(73) Proprietor: PPG INDUSTRIES, INC., Pittsburgh Pennsylvania 15272 (US)
(72) Inventor: Grunewalder, John Finley, Glenshaw, Pa. 15116 (US); Voelker, Mark Anthony, Butler, Pa. 16001 (US)
(74) Representative: Sternagel, Hans-Günther, Dr.

(56) References cited:
- EP-A- 0 040 106
- CA-A- 1 207 952
- GB-A- 2 128 091
- US-A- 3 281 318
- US-A- 3 617 314
- US-A- 4 360 385

## Description

The invention is directed to an aqueous treatment composition and a method for rendering porous substrates water repellent and for preserving porous substrates utilizing the aqueous treatment composition.

Generally, the art-known porous substrate treatment compositions such as wood treatment compositions are organic solvent-borne compositions. For example, U S-A-4,360,385 and 4,404,239 are directed to solvent-borne wood treatment compositions containing olefin and paraffin materials containing a substantial proportion of compounds containing from 20 to 24 carbon atoms and, optionally, additives such as wood preservatives, alkyd resins and organic ionizable compounds. It is disclosed in the aforesaid United States patents that such art-known organic solvent-borne wood treatment compositions can provide wood with water-repellency at an efficiency level of at least 40 percent, preferably at least 50 percent and more preferably at least 60 percent as determined by the N.W.M.A. Swellometer Test described in detail in a publication identified as NWMA-M-2-81, published by the National Woodwork Manufacturers Association.

Increasing environmental concerns have generated an ever increasing need to develop treatment compositions with lower levels of organic solvents. One approach to reducing the organic solvent content investigated by the present inventors involves the utilization of an aqueous treatment composition. However, heretofore water-borne wood treatment compositions have not been able to provide nearly the level of water-repellency to wood as organic solvent-borne treatment compositions. For example, N.W.M.A. Swellometer Test NWMA-M-2-81, Sec. 3.2.1 concerning the method of treating wood for the purposes of the test discloses that the five test specimens (immersed) in the formulation to be tested have an immersion time for solvent-based formulations of 30 seconds and immersion time for water-borne formulations of 3 minutes. In part, the difficulty in water-repellency is believed to be due to the inefficient penetration of the wood by the water-borne formulation. Penetration of wood by water is inefficient because water, upon penetrating wood, swells the wood and hinders further penetration of the wood. Hence, other ingredients are hindered from penetrating the wood in a short exposure time. The object of the present invention is to provide an aqueous wood-treating composition having penetration and water-repellency that is comparable to that of solvent-borne compositions.

This object is attained by an aqueous treating composition for a porous substrate in the form of an oil-in-water dispersion comprising:
(A) from 5 to 80 percent by weight of a dispersed phase having a particle mean average diameter up to 0,3 ²m (3000 ) and containing 5 percent to 90 percent by weight of a porous substrate-penetrating organic solvent, from 1.5 percent to 90 percent by weight of a water-repellent material selected from the group consisting of an α-olefin blend and/or paraffin blend wherein at least 50 wt% of the olefin blend or paraffin blend consists of compounds having from 20 to 24 carbon atoms, from 0 to 20 percent of a porous substrate preservative and from 0.10 to 10 percent by weight of a water-soluble anionic and/or nonionic surfactant in combination with an alcohol containing 10-16 carbon atoms and
(B) from 20 percent to 95 percent by weight water; wherein the dispersed organic phase present in said aqueous treating composition in an amount insufficient to cause the dispersed organic phase to become a continuous organic phase, wherein the 10-16 carbon atoms containing alcohol is present in amounts from 1 to 10 percent by weight based on the composition.

This object is furthermore attained by a method of preparing an aqueous treating composition for a porous substrate in the form of an oil-inwater dispersion by particulating in an aqueous medium in the presence of a stabilizer
(A) from 5 to 80 percent by weight of a phase to a particle mean average diameter up to 0,3 ²m (3000 ) and containing a mixture of 10 percent to 90 percent by weight of a porous substrate penetrating organic solvent, from 1.5 to 90 percent by weight of a water repellent material selected from the group consisting of an α-olefin blend and/or paraffin blend wherein at least 50 wt% of the olefin blend or paraffin blend consists of compounds having 20 to 24 carbon atoms, from 0 to 20 percent by weight of a porous substrate preservative and from 0.10 to 10 percent by weight of a water-soluble anionic and/or nonionic surfactant as stabilizer in combination with an alcohol containing 10 to 16 carbon atoms and
(B) wherein the aqueous medium is present in amounts from 20 to 95 percent by weight and wherein the dispersed organic phase present in said aqueous treating composition in an amount insufficient to cause the dispersed organic phase to become a continuous organic phase, wherein the 10-16 carbon atoms containing alcohol is present in amounts from 1 to 10 percent by weight based on the composition.

The aqueous treatment composition can be initially prepared in the form of a concentrate, which can be thinned with water with or without supplemental ingredients being added thereto. As an aqueous wood treatment, the composition of this invention is capable of providing a wood substrate with water repellency at a level of at least 40 percent and up to 60 percent or higher as determined by NWMA-M-2-81 modified in that the immersion time for said aqueous wood-treatment composition for NWMA-M-2-81 shall be 30 seconds instead of 3 minutes.

Also encompassed by the invention is a method for making the dispersions and coating of this invention preferably by microfluidization. Further encompassed by the invention is a method of treating porous substrates such as wood which comprises applying the water-repellant composition of this invention to the wooden substrate followed by drying the wooden substrate. The resultant treated wooden substrate can be optionally coated or cladded. While the treatment composition is described herein with particularity to wood treating compositions, the present invention encompasses treating compositions for other porous substrates such as textiles and cements.

As set forth hereinabove, the aqueous treating composition of the invention is an oil-in-water dispersion. By the term "oil-in-water dispersion" is meant that the dispersed phase herein is an oil and the continuous phase is water or an aqueous medium.

The dispersed phase of the oil-in-water dispersion of this invention is in the range of 5 to 80 and preferably 10 to 70 percent by weight based on total weight of the dispersion. The dispersed phase comprises a solvent medium containing a mixture of solvents which are substrate-penetrating solvents, and further comprises a water repellent. The dispersed phase contains from 5 to 90 percent by weight of a porous substrate penetrating organic solvent, and from 1.5 to 90 percent of the water repellent.

The useful wood penetrating solvents for example, are selected on the basis that they are generally non-polar and do not appreciably associate with the wood components, say, by hydrogen bonding. Illustrative but non-limiting examples of the solvents can be xylene, toluene, mineral spirits, naphtha, ketones and a mixture thereof.

The water repellent of the dispersed phase comprises an alpha olefin or paraffin blend having 20 to 24 carbon atoms or a mixture thereof with the alpha olefin blend being preferred. The individual cuts of alpha olefin having 20 to 24 carbon atoms are useful, though such cuts are not readily available and are generally less preferred for this reason. The paraffin material can only be used as a blend of compounds as described below, it being found that individual paraffins do not provide the desired water-repellency results. The olefin and paraffin blends are characterized by consisting essentially of a narrow range of carbon compounds. That is, while paraffins are well known and have been used extensively heretofore, such materials are blends of a wide range of different carbon chain length materials. These commonly used paraffin blends are difficult to coat over and do not provide the good water-repellency efficiencies of the olefin and paraffin compounds described herein. It has been found that narrow molecular weight blends (cuts) of olefin and/or paraffin provide good water-repellency to wood. At least 50 percent of the olefin blend or paraffin blend consists essentially of compounds having from 20 to 24 carbon atoms. Preferably, the olefin blend and paraffin blend contain at least 70 percent and, more preferably, at least 90 percent of the compounds having between 20 and 24 carbon atoms. The most preferred blend contains at least 96 percent of the compounds having 20 to 24 carbon atoms and less than 3 percent of the compounds having less than 20 carbon atoms and less than 1 percent having more than 24 carbon atoms.

Substituted and unsubstituted hydrocarbon resins particularly alkyd resins have conventionally been used in wood-treating compositions to provide a degree of water-repellency and to aid holdout of subsequently applied materials. The alkyd resins are polyesters of polyhydroxyl alcohols and polycarboxyl acids chemically combined with various drying, semi-drying and nondrying oils in different proportions. Thus, for example, the alkyd resins are made from polycarboxylic acids such as phthalic acid, maleic acid, fumaric acid, isophthalic acid, succinic acid, adipic acid, azelaic acid, sebacic acid as well as from anhydrides of such acids where they exist. The polyhydric alcohols which are reacted with the polycarboxylic acid include glycerol, trimethylolethane, trimethylolpropane, pentaerythritol, sorbitol, mannitol, ethylene glycol, diethylene glycol and 2,3-butylene glycol. The alkyd resins are produced by reacting the polycarboxylic acid and the polyhydric alcohol together with a drying, semi- drying or non-drying oil in proportions depending upon the properties desired. The oils are coupled into the resin molecule by esterification during the manufacturing and become an integral part of the polymer. The oil is fully saturated or predominately unsaturated. The fully saturated oils tend to give a plasticizing effect to the alkyd, whereas the predominately unsaturated oils tend to crosslink and dry rapidly with oxidation to give more tough and durable alkyd resins. Suitable oils include coconut oil, fish oil, linseed oil, tung oil, castor oil, cottonseed oil, safflower oil, soybean oil and tall oil. Various proportions of the polycarboxylic acid, polyhydric alcohol and oil are used to obtain alkyd resins of various properties. Phenolic modified hydrocarbon resins such as NEVILLAC® 10° XL, available from Neville Chemical Co. have also been found to be particularly useful in providing water repellency and hold out.

Many known compounds which are useful as substrate preservatives for some porous substrate such as wood. Examples of wood preservatives include carbamates such as 3-iodo-2-propyl butyl carbamate; organic tin compounds, e.g., triphenyl and tributyl tin oxide; chlorinated compounds, e.g., tri-, tetra- and pentachlorophenol, mono- and dichloro naphthalenes, and metal naphthenates, e.g., zinc and copper naphthenates, and quaternary ammonium compounds. The preservative content can be from 0 to 20 percent and typically 0.5 to 20 percent by weight of the dispersed phase.

Other conventional additives can be included in the treating composition of this invention. For example, surface modifiers, insecticides, biostatic agent, biocides or a mixture thereof can be employed. Pigments can also be employed herein.

In the process of this invention, the intended ingredients of the dispersion, including the optional ingredients, are dispersed in an aqueous medium with a dispersing means such as a homogenizer. Typically, a mixture of the ingredients is adapted to a form that will admit it to the dispersing means. Illustratively, the mixture is in the form of a solution or is dissolved with a solvent or a mixture of solvents and then introduced into an aqueous medium in the presence of a stabilizer.

Typically, the solvent employed here is the same as the aforedescribed substrate-penetrating solvent. Preferably, a cosolvent is employed as well. It is believed that the (primary) solvent which is preferably a non-polar solvent dissolves the mixture and the cosolvent which is preferably polar enhances the stability of the resultant composition. The dissolved mixture is mixed into an aqueous medium in the presence of the stabilizer. Illustratively, the dissolved mixture is introduced into and thoroughly mixed with an aqueous medium containing a stabilizer which is typically a surfactant or a combination of surfactants. The resultant mixture can be described as an emulsion.

The stabilizer can be a surfactant which is typically an anionic and/or a nonionic surfactant, preferably in combination with an alcohol containing 10 to 16 carbon atoms (C₁₀-C₁₆ alcohol). Specific but non-limiting examples of the surfactant combinations that can be found in the working examples of the invention. Amounts of 1 to 10 percent and preferably 1 to 4 percent by weight resin solids of the anionic surfactant based on the composition can be employed. Amounts of 1 to 10 percent by weight and preferably 1 to 6 percent by weight resin solids of the nonionic surfactant or the C₁₀-C₁₆ alcohol based on the composition can be employed. In the preferred embodiment of the invention, the surfactant combination comprises an anionic surfactant and a nonionic co-surfactant in combination with the C₁₀-C₁₆ alcohol. It has been found that such a surfactant combination can improve stability of the dispersions of the invention.

The emulsion can be particulated by subjecting it to stress by a homogenizing means. The mixture is subjected to stress sufficient to produce microparticles which have a mean particle size diameter of 0,05 - 0,3 »m (500 to 3,000 angstroms (Å)) and typically (0,05 - 0,15 »m) (500 to 1500Å), preferably in monomodal distribution.

A preferred mode of subjecting the mixture to the appropriate stress is by the use of a MICROFLUIDIZER® emulsifier, which is available from Microfluidics Corporation in Newton, Massachusetts. The MICROFLUIDIZER® high-pressure impingement emulsifier is patented in U S-A-4,533,254. The device consists of a high pressure (up to 1,379 · 10⁸ Pa (20,000 pounds per square inch "psi")) pump and an interaction chamber wherein the emulsification takes place. The pump forces the mixture of ingredients in an aqueous medium into the chamber where it is split into at least two streams which pass at very high velocity through at least two splits and collide resulting in the particulation of the mixture into small particles. Generally, the mixture is passed through the emulsifier once at a pressure between 3,447 · 10⁷ and 1,034 · 10⁸ Pa (5,000 and 15,000 psi). Multiple passes can result in smaller average particle size and a narrower range for the particle size distribution. When using the aforesaid MICROFLUIDIZER® emulsifier, stress is applied by liquid impingement as has been described. However, it should be understood that, if desired, other modes of applying stress to the pre-emulsification mixture can be utilized so long as sufficient stress is applied to achieve the requisite particle size distribution, that is, such that, less than 20 percent of the resultant microparticles have a mean diameter greater than 5 »m in the resultant product. Alternate means of applying stress, e.g., the use of ultrasonic energy can be employed.

Stress is described as a force per unit area. Although the precise mechanism by which the MICROFLUIDIZER® emulsifier stresses the pre- emulsification mixture to particulate, it is not thoroughly understood; it is theorized that stress is exerted in more than one manner. It is believed that one manner in which stress is exerted is by shear. "Shear" means that the force is such that one layer or plane moves parallel to an adjacent parallel plane. Stress can also be exerted from all sides as a bulk compression stress. In this instance, stress could be exerted without any shear. A further manner of producing intense stress is by cavitation. Cavitation occurs when the pressure within a liquid is reduced enough to cause vaporization. The formation and collapse of the vapor bubbles occurs violently over a short time period and produces intense stress. Although not intending to be bound by theory, it is believed that both shear and cavitation contribute to producing the stress which particulates the mixture.

The resultant dispersion can be in the form of a concentrate containing from 5 to 80 percent and preferably from 20 to 50 percent solids of dispersed phase based on the total weight at ambient temperature. The concentrate is generally further diluted with water to form a ready-to-use dispersion.

Compositions of this invention comprising the dispersion are especially useful when used for treating wood. The compositions can be applied by any conventional method including dipping, flow coating, roll coating, and in a vacuum/pressure apparatus. Generally, the amount of treating composition applied is sufficient to provide the wood with the desired water-repellency. Water repellency of the treated composition can be at a level of at least 40 percent and preferably 50 percent and more preferably 60 percent as determined by NWMA-M-2-81 Swellometer test with an immersion time of 30 seconds. The wood, after being treated, is optionally further processed and then dried.

Further illustrating the invention are the following non-limiting examples.

### EXAMPLE 1

The following composition was formulated as follows. In a 1 liter beaker was placed 8.1 percent C₂₀-C₂₄ alpha olefin¹, 13.4 percent hydrocarbon resin², 2.0 percent 3-iodo-2-propynyl butyl carbamate³, 4.1 percent anionic⁴ and 6.1 percent nonionic⁵ surfactants, 4.1 percent alcohol⁶, .284 percent microbiocide⁷, and finally 20.4 percent "Solvesso® 150"⁸. The mixture was warmed until all the components formed a homogeneous liquid. The liquid was then introduced into a dispersing apparatus⁹ and water was added until there was a drastic increase in viscosity (the solution had a viscosity in excess of 200 mPas at this point, which was its inversion point). The resultant emulsion was a concentrate in the form of an oil-in-water emulsion that could be further diluted with water.
(1) Available from Chevron Chemical as a "C₂₀-C₂₄ alpha olefin".
(2) Available from Neville Chemical as "Nevillac® 10° XL".
(3) Available from Troy Chemical as "Polyphase P-100".
(4) Available from GAF Corporation as "Alipal® CO-436".
(5) Available from GAF Corporation as "Igepal® CO-897".
(6) Available from Bxxon as "Exxal® 13".
(7) Available from ICI Americas as "Proxel® CRL".
(8) Available from Exxon as "Solvesso® 150".
(9) Available from Microfluidics Corporation as "Microfluidizer® emulsifier".

### EXAMPLE 2

The emulsion from Example 1 was diluted by three parts by volume water to one part by volume concentrate to yield a ready-to-use wood- treating composition. The water repellency of the composition was tested following the NWMA #M-2-81 test method. The wood preservative properties were tested by NWMA Soil Block Test #M-1-81 at Mississippi State University.
The ready to use wood treating composition was as follows:

| Ingredients | Percent Compositions |
|---|---|
| Alpha Olefin¹ | 2.0 |
| Hydrocarbon Resin² | 3.3 |
| Preservative³ | .50 |
| Solvent⁴ | 5.0 |
| Surfactant 1⁵ | 1.0 |
| Surfactant 2⁶ | 1.5 |
| Alcohol⁷ | 1.0 |
| Microbiocide⁸ | .07 |
| Water | 85.63 |

| | |
|---|---|
| (1) Available from Chevron Chemical as a "C₂₀-C₂₄ alpha olefin". | |
| (2) Available from Neville Chemical as "Nevillac® 10° XL". | |
| (3) Available from Troy Chemical as "Polyphase P-100". | |
| (4) Available from Exxon as "Solvesso® 150". | |
| (5) Available from GAF Corporation as "Alipal® CO-436". | |
| (6) Available from GAF Corporation as "Igepal® CO-897". | |
| (7) Available from Exxon as "Exxal® 13". | |
| (8) Available from ICI Americas as "Proxel® CRL". | |

Three to five matched wood wafers were dipped in the above composition for a period of 30 seconds as prescribed by the NWMA M-2-81 Swell-O-Meter test procedure. A water-repellency efficiency of 70.1 after five days was obtained.

The above composition was sent to Mississippi State University for soil block testing. Summary of the individual percent weight losses of treated southern yellow pine blocks (3.05 x 19 x 19mm) after exposure to brown-rot fungus (G. trabeum) for five weeks are stated in the table below.

**TABLE 1**

| FORMULA | % CONCENTRATION | BLOCK # | RETENTION »g/m³(pcf)¹ BIOCIDE | W1² (g) | W2³ (g) | % WT. LOSS | VISUAL INSPECT. |
|---|---|---|---|---|---|---|---|
| Ex. 1 | 100.00% | W-21 | 871,9 (54.430) | 1.04 | 1.04 | 0.000 | ND⁴ |
| | | W-22 | 817,4 (51.028) | 1.10 | 1.10 | 0.000 | ND |
| | | W-23 | 862,8 (53.863) | 1.10 | 1.10 | 0.000 | ND |
| | | W-24 | 1080,8 (67.470) | 0.93 | 0.91 | 2.150 | ND |
| | | W-25 | 1108,1 (69.171) | 0.94 | 0.93 | 1.060 | ND |
| Control | ------- | W-31 | 0.000 | 0.97 | 0.51 | 47.42 | D⁵ |
| | | W-32 | 0.000 | 0.93 | 0.54 | 41.94 | D |
| | | W-33 | 0.000 | 0.95 | 0.46 | 51.58 | D |
| | | W-34 | 0.000 | 0.80 | 0.39 | 51.25 | D |
| | | W-35 | 0.000 | 0.77 | 0.45 | 41.56 | D |

| | | | | | | | |
|---|---|---|---|---|---|---|---|
| (1) pcf stands for pounds per cubic foot. | | | | | | | |
| (2) W1 stands for initial weight in grams (g) of the wood before exposure to the fungus. | | | | | | | |
| (3) W2 stands for weight in grams (g) of the wood after exposure to the fungus. | | | | | | | |
| (4) ND stands for "No Decay" upon visual inspection. | | | | | | | |
| (5) D stands for "Decay" upon visual inspection. | | | | | | | |

### EXAMPLE 3

The following shows the effects of various resins on the water repellency efficiency of the treatment composition. The treatment composition of Example A was essentially the same as in Example 1 except that different hydrocarbon resins were employed and the concentrate was diluted to yield the following compositions. Examples B and C are comparative Examples

| Composition (%) | A | B | C |
|---|---|---|---|
| Alpha Olefin¹ | 2.0 | 2.6 | 5.0 |
| Hydrocarbon Resin² | 3.3 | | |
| Hydrocarbon Resin³ | | 14.1 | |
| Hydrocarbon Resin⁴ | | | 11.6 |
| Preservative⁵ | .50 | .50 | .50 |
| Solvent⁶ | 5.0 | 5.0 | 5.0 |
| Surfactant 1⁷ | 1.0 | .50 | |
| Surfactant 2⁸ | 1.5 | | .50 |
| Alcohol⁹ | 1.0 | .20 | 1.5 |
| Microbiocide¹⁰ | .07 | .07 | .07 |
| Water | 85.63 | 77.03 | 81.33 |
| Water-repellency | 70.1 | 55.3 | 64.3 |

| | | | |
|---|---|---|---|
| (1) Available from Chevron Chemical as a "C₂₀-C₂₄ alpha olefin". | | | |
| (2) Available from Neville Chemical as "Nevillac® 10° XL". | | | |
| (3) A dehydrated castor oil short oil alkyd. | | | |
| (4) A soya oil long oil alkyd. | | | |
| (5) Available from Troy Chemical as "Polyphase P-100". | | | |
| (6) Available from Exxon as "Solvesso® 150". | | | |
| (7) Available from GAF Corporation as "Alipal® CO-436". | | | |
| (8) Available from GAF Corporation as "Igepal® CO-897" | | | |
| (9) Available from Exxon as "Exxal® 13". | | | |
| (10) Available from ICI Americas as "Proxel® CRL". | | | |

### EXAMPLE 4

This example shows the importance of the alpha olefin as compared to paraffin wax for water-repellency efficiency. The following formulations were made and tested for water repellency as described in Example 2:

| Composition | Water-repellency |
|---|---|
| Example 1 | 70.1 |
| Example 1 (with paraffin¹ instead of alpha olefin) | 14.8 |

| | |
|---|---|
| (1) From W&F Manufacturing Corporation, Buffalo, New York. | |

### EXAMPLE 5

This example illustrates the efficiency of the treatment with respect to dip time. The composition of Example 1 was formulated and the same procedure was followed for reduction. The water-repellency efficiency measurement was conducted as per NWMA M-81 test except that the employed wafers were dipped for 20 and 30 seconds. The results after 5 days were:

| Composition | Dip Time | Water-repellency |
|---|---|---|
| Example 1 | 20 sec. | 60.1 |
| Example 1 | 30 sec. | 70.1 |
| "Woodlife Milltreat® F¹" | 30 sec. | 75.8 |

| | | |
|---|---|---|
| (1) A solvent based water repellent wood preservative product available from Beecham Home Improvement Products, Inc. | | |

The results clearly show that even using a short dip time of the water-base material, the water repellency efficiency is good. Also, the data shows that this formulation is comparable in efficiency to a commercially available solvent based, wood water repellent, preservative solution, Woodlife Milltreat® F.

### EXAMPLE 6

This experimental design used to determine the optimal surfactant levels illustrates the interaction between the surfactant levels and penetration of the preservative. The compositions were formulated as in Example 1 indicated and diluted as in Example 2 to yield the following compositions.

| Ingredients | Percent Composition | | | | | | | |
|---|---|---|---|---|---|---|---|---|
| | A | B | C | D | E | F | G | H |
| Alpha Olefin¹ | 2.0 | 2.0 | 2.0 | 2.0 | 2.0 | 2.0 | 2.0 | 2.0 |
| Hydrocarbon Res.² | 3.3 | 3.3 | 3.3 | 3.3 | 3.3 | 3.3 | 3.3 | 3.3 |
| Preservative³ | .50 | .50 | .50 | .50 | .50 | .50 | .50 | .50 |
| Solvent⁴ | 5.0 | 5.0 | 5.0 | 5.0 | 5.0 | 5.0 | 5.0 | 5.0 |
| Alcohol⁵ | 1.0 | 1.0 | 1.0 | 1.0 | 2.0 | 2.0 | 2.0 | 2.0 |
| Surfactant 1⁶ | 1.0 | .50 | 1.0 | .50 | 1.0 | .50 | 1.0 | .50 |
| Surfactant 2⁷ | .80 | .80 | 1.5 | 1.5 | 1.5 | 1.5 | .80 | .80 |
| Microbiocide⁸ | .07 | .07 | .07 | .07 | .07 | .07 | .70 | .70 |
| Water | 86.33 | 86.83 | 85.63 | 86.13 | 84.63 | 85.13 | 85.33 | 85.83 |

| | | | | | | | | |
|---|---|---|---|---|---|---|---|---|
| (1) Available from Chevron Chemical as a "C₂₀-C₂₄ alpha olefin". | | | | | | | | |
| (2) Available from Neville Chemical as "Nevillac® 10° XL". | | | | | | | | |
| (3) Available from Troy Chemical as "Polyphase P-100". | | | | | | | | |
| (4) Available from Exxon as "Solvesso® 150". | | | | | | | | |
| (5) Available from Exxon as "Exxal® 13". | | | | | | | | |
| (6) Available from GAF Corporation as "Alipal® CO-436". | | | | | | | | |
| (7) Available from GAF Corporation as "Igepal® CO-897". | | | | | | | | |
| (8) Available from ICI Americas as "Proxel® CRL". | | | | | | | | |

After a 30 second dip in the treatment, the 2,86 x 2,86 x 30,48 cm (1.125 x 1.125 x 12.0 inch) pine penetration blocks were allowed to dry for seven days at room temperature. The blocks were then planed on all four faces until they measure 2,54 x 2,54 x 30,48 cm (1.0 x 1.0 x 12.0 inch) and then cut into 0,635 cm (.25 inch) thick wafers and crushed for detection of the active ingredient by "Soxhlet" extraction.

| Solution | Depth into wood/cm (inches) | Penetration of IPBC |
|---|---|---|
| A | 0.635 (.25) | .765ug |
| | 1.27 (.50) | <.02ug |
| B | 0.635 (.25) | .681ug |
| | 1.27 (.50) | <.02ug |
| C | 0.635 (.25) | .682ug |
| | 1.27 (.50) | .841ug |
| | 1.905 (.75) | .634ug |
| | 2.54 (1.00) | 1250ug |
| | 3.175 (1.25) | 983ug |
| | 3.81 (1.50) | 880ug |
| | 4.445 (1.75) | 1030ug |
| | 5.08 (2.00) | 460ug |
| D | 0.635 (.25) | .538ug |
| | 1.27 (.50) | .023ug |
| E | 0.635 (.25) | .590ug |
| | 1.27 (.50) | <.020ug |
| F | 0.635 (.25) | .612ug |
| | 1.27 (.50) | <.020ug |
| G | 0.635 (.25) | .659ug |
| | 1.27 (.50) | <.020ug |
| H | 0.635 (.25) | .672ug |
| | 1.27 (.50) | <.020ug |

The results show that the levels of the various surfactants chosen in sample "C" optimize the penetration of the preservative to a depth far beyond the others.

### EXAMPLE 7

This example shows the versatility of the formulation which allows one to change the active ingredient to fit the product requirements. The following emulsions were formulated as in Example 1 and diluted as in Example 2 to yield the following:

| Ingredient | Percent Composition | | |
|---|---|---|---|
| | A | B | C |
| Alpha Olefin¹ | 2.0 | 2.0 | 2.0 |
| Hydrocarbon Resin² | 3.3 | 3.3 | 3.3 |
| Preservative³ | .50 | | |
| Preservative⁴ | | 1.0 | |
| Preservative⁵ | | | 3.0 |
| Solvent⁶ | 5.0 | 5.0 | 5.0 |
| Surfactant 1⁷ | 1.0 | 1.0 | 1.0 |
| Surfactant 2⁸ | 1.5 | 1.5 | 1.5 |
| Alcohol⁹ | 1.0 | 1.0 | 1.0 |
| Microbiocide¹⁰ | .07 | .07 | .07 |
| Water | 85.63 | 85.13 | 83.13 |

| | | | |
|---|---|---|---|
| (1) Available from Chevron Chemical as a "C₂₀-C₂₄ alpha olefin". | | | |
| (2) Available from Neville Chemical as "Nevillac® 10° XL". | | | |
| (3) Available from Troy Chemical as "Polyphase P-100". | | | |
| (4) Available from Beckman Laboratories as "Busan ® 1009". | | | |
| (5) Available from Sherex Chemicals as "Adogen® 432". | | | |
| (6) Available from Exxon as "Solvesso® 150". | | | |
| (7) Available from GAF Corporation as "Alipal® CO-436". | | | |
| (8) Available from GAF Corporation as "Igepal® CO-897". | | | |
| (9) Available from Exxon as "Exxal® 13". | | | |
| (10) Available from ICI Americas as "Proxel® CRL". | | | |

The products were stable for at least three months in ambient temperatures and in a 120° hot room.

### EXAMPLE 8

This illustration shows the versatility of the formulation which allows one to change the solvent system to fit the product application. The following formulations were formulated as stable samples as in Example 1 and diluted as in Example 2 to yield the following formulations:

| Ingredient | Percent Composition | | | | | |
|---|---|---|---|---|---|---|
| | A | B | D | E | F | G |
| Alpha Olefin¹ | 2.0 | 2.0 | 2.0 | 2.0 | 2.0 | 2.0 |
| Hydrocarbon Resin² | 3.3 | 3.3 | 3.3 | 3.3 | 3.3 | 3.3 |
| Preservative³ | .50 | .50 | .50 | .50 | .50 | .50 |
| Solvent⁴ | 5.0 | | | | | |
| Solvent⁵ | | 5.0 | | | | |
| Solvent⁶ | | | 5.0 | | | |
| Solvent⁷ | | | | 5.0 | | |
| Solvent⁸ | | | | | 5.0 | |
| Solvent⁹ | | | | | | 5.0 |
| Alcohol¹⁰ | 1.0 | 1.0 | 1.0 | 1.0 | 1.0 | 1.0 |
| Surfactant 1¹¹ | 1.0 | 1.0 | 1.0 | 1.0 | 1.0 | 1.0 |
| Surfactant 2¹² | 1.5 | 1.5 | 1.5 | 1.5 | 1.5 | 1.5 |
| Microbiocide¹³ | .07 | .07 | .07 | .07 | .07 | .70 |
| Water | 85.63 | 85.63 | 85.63 | 85.63 | 85.63 | 85.63 |

| | | | | | | |
|---|---|---|---|---|---|---|
| (1) Available from Chevron Chemical as a "C₂₀-C₂₄ alpha olefin". | | | | | | |
| (2) Available from Neville Chemical as "Nevillac® 10° XL". | | | | | | |
| (3) Available from Troy Chemical as "Polyphase P-100". | | | | | | |
| (4) Available from Exxon as "Solvesso® 150". | | | | | | |
| (5) Xylene available from Ashland Chemical. | | | | | | |
| (6) Methyl isobutyl ketone available from Exxon. | | | | | | |
| (7) Cyclohexanone available from Ashland Chemical. | | | | | | |
| (8) Odorless kerosene available from Aldrich. | | | | | | |
| (9) Mineral spirits available from Ashland Chemical. | | | | | | |
| (10) Available from Exxon as "Exxal ® 13". | | | | | | |
| (11) Available from GAF Corporation as "Alipal ® CO-436". | | | | | | |
| (12) Available from GAF Corporation as "Igepal ® CO-897". | | | | | | |
| (13) Available from ICI Americas as "Proxel ® CRL". | | | | | | |

## Claims

1. An aqueous treating composition for a porous substrate in the form of an oil-in-water dispersion comprising:
(A) from 5 to 80 percent by weight of a dispersed phase having a particle mean average diameter up to 0,3 »m (3000 Å) and containing 5 percent to 90 percent by weight of a porous substrate-penetrating organic solvent, from 1.5 percent to 90 percent by weight of a water-repellent material selected from the group consisting of an α-olefin blend and/or paraffin blend wherein at least 50 wt% of the olefin blend or paraffin blend consists of compounds having from 20 to 24 carbon atoms, from 0 to 20 percent of a porous substrate preservative and from 0.10 to 10 percent by weight of a water-soluble anionic and/or nonionic surfactant in combination with an alcohol containing 10-16 carbon atoms and
(B) from 20 percent to 95 percent by weight water; wherein the dispersed organic phase present in said aqueous treating composition in an amount insufficient to cause the dispersed organic phase to become a continuous organic phase, wherein the 10-16 carbon atoms containing alcohol is present in amounts from 1 to 10 percent by weight based on the composition.

2. The aqueous treating composition of claim 1 capable of providing a wood substrate with water repellency at a level of at least 40 percent as determined by NWMA-M-2-81 except that the immersion time for said aqueous treating composition for NWMA-M-2-81 is 30 seconds.

3. The aqueous treating composition of claim 1 comprising from 10 percent to 70 percent by weight of said dispersed phase and from 30 percent to 90 percent by weight water, and further characterized as capable of providing a wood substrate with water repellency at a level of at least 50 percent as determined by modified NWMA-M-2-81 wherein the immersion time for said aqueous wood-treating composition is 30 seconds.

4. A method of preparing an aqueous treating composition for a porous substrate in the form of an oil-in-water dispersion by particulating in an aqueous medium in the presence of a stabilizer
(A) from 5 to 80 percent by weight of a phase to a particle mean average diameter up to 0,3 »m (3000 Å) and containing a mixture of 10 percent to 90 percent by weight of a porous substrate penetrating organic solvent, from 1.5 to 90 percent by weight of a water repellent material selected from the group consisting of an α-olefin blend and/or paraffin blend wherein at least 50 wt% of the olefin blend or paraffin blend consists of compounds having 20 to 24 carbon atoms, from 0 to 20 percent by weight of a porous substrate preservative and from 0.10 to 10 percent by weight of a water-soluble anionic and/or nonionic surfactant as stabilizer in combination with an alcohol containing 10 to 16 carbon atoms and
(B) wherein the aqueous medium is present in amounts from 20 to 95 percent by weight and wherein the dispersed organic phase present in said aqueous treating composition in an amount insufficient to cause the dispersed organic phase to become a continuous organic phase, wherein the 10-16 carbon atoms containing alcohol is present in amounts from 1 to 10 percent by weight based on the composition.

5. The method of claim 4 wherein the mixture is particulated by subjecting it to stress sufficient to produce disposed particles having a mean particle size diameter of 500 to 1500Å.

6. The method of claim 5 wherein stress is applied by liquid to liquid impingement.

7. The method of claim 4 wherein the mixture is particulated with a means comprising a homogenizer.

8. The method of claim 4 wherein the mixture is particulated by passing it through a microfluidizer.

9. The method of claim 8 wherein the mixture is prepared by mixing the components with the organic solvent, followed by emulsifying the resultant solubilized mixture in water in the presence of a stabilizer.

10. The method of claim 9 wherein the organic solvent is a mixture of a polar and a non-polar solvent.

11. The method of claim 10 wherein the stabilizer is a surfactant comprising a mixture of an anionic and a nonionic surfactant.

12. Use of the aquous composition according to any of claims 1-3 or prepared according to any of claims 4-11 for treating a porous substrate to render it water repellent which comprises
(I) applying to the substrate the aqueous composition specified above,
(II) drying said substrate.

## Patentansprüche

1. Eine wäßrige Zusammensetzung zur Behandlung eines porösen Substrats in Form einer Öl-in-Wasser-Dispersion bestehend:
(A) aus 5 bis 80 Gewichtsprozent einer dispergierten Phase mit einem mittleren Durchschnittsdurchmesser der Partikel bis zu 0,3 »m (3000 Å) und 5 bis 90 Gewichtsprozent eines porösen substratdurchdringenden organischen Lösemittels enthaltend, aus 1,5 bis 90 Gewichtsprozent eines wasser-abstoßenden Materials, ausgewählt aus der Gruppe bestehend aus einer α-Olefin-Mischung und/oder Paraffin-Mischung, wobei mindestens 50 Gewichtsprozent der Olefin- oder der Paraffin-Mischung aus Verbindungen mit 20 bis 24 Kohlenstoffatomen bestehen, aus 0 bis 20 Prozent eines Konservierungsmittels für ein poröses Substrat und aus 0,10 bis 10 Gewichtsprozent eines wasserlöslichen anionischen und/oder nichtionischen oberflächenaktiven Stoffes in Kombination mit einem 10 bis 16 Kohlenstoffatome enthaltenden Alkohol und
(B) aus 20 bis 95 Gewichtsprozent Wasser, wobei die dispergierte organische Phase in der besagten wäßrigen Behandlungszusammensetzung in einer Menge vorkommt, die nicht ausreicht, um die dispergierte organische Phase zu einer anhaltenden organischen Phase werden zu lassen, wobei der 10 bis 16 Kohlenstoffatome enthaltende Alkohol in Mengen von 1 bis 10 Gewichtsprozent basierend auf der Zusammen-setzung vorhanden ist.

2. Die wäßrige Behandlungszusammensetzung nach Anspruch 1, wobei sie ein Holzsubstrat zu mindestens 40 Prozent wasserabstoßend machen kann, wie durch die NWMA-M-2-81 festgelegt mit der Ausnahme, daß die Immersionszeit für die besagte wäßrige Behandlungs-zusammensetzung für die NWMA-M-2-81 30 Sekunden beträgt.

3. Die wäßrige Behandlungszusammensetzung nach Anspruch 1, wobei sie aus 10 bis 70 Gewichts-prozent der besagten dispergierten Phase und aus 30 bis 90 Gewichtsprozent Wasser besteht, und weiter gekennzeichnet durch die Fähigkeit, ein Holzsubstrat zu mindestens 50 Prozent wasserabstoßend zu machen, wie in der abgeänderten NWMA-M-2-81 festgelegt, wobei die Immersions-zeit für die besagte wäßrige Zusammensetzung für die Holzbehandlung 30 Sekunden beträgt.

4. Eine Methode zur Zubereitung einer wäßrigen Verbindung für die Behandlung eines porösen Substrats in Form einer Öl-in-Wasser-Dispersion durch Bildung von Partikeln in einem wäßrigen Medium in Gegenwart eines Stabilisators,
(A) durch 5 bis 80 Gewichtsprozent einer Phase mit einem mittleren Durchschnittsdurchmesser der Partikel bis zu 0,3 »m (3000 Å) und eine Mischung von 10 bis 90 Gewichts-prozent eines porösen substratdurchdringenden organischen Lösemittels enthaltend, durch 1,5 bis 90 Gewichtsprozent eines wasserabstoßenden Materials, ausgewählt aus der Gruppe bestehend aus einer α-Olefin-Mischung und/oder Paraffin-Mischung, wobei mindestens 50 Gewichtsprozent der Olefin- oder der Paraffin-Mischung aus Verbindungen mit 20 bis 24 Kohlenstoffatomen bestehen, durch 0 bis 20 Gewichtsprozent eines Konservierungsmittels für ein poröses Substrat und durch 0,10 bis 10 Gewichtsprozent eines wasserlöslichen anionischen und/oder nichtionischen oberflächenaktiven Stoffes als Stabilisator in Kombination mit einem 10 bis 16 Kohlenstoffatome enthaltenden Alkohol, wobei
(B) das wäßrige Medium in Mengen von 20 bis 95 Gewichtsprozent vorkommt und die dispergierte organische Phase in der besagten wäßrigen Behandlungszusammensetzung in einer Menge vorhanden ist, die nicht ausreicht, um die dispergierte organische Phase zu einer anhaltenden organischen Phase werden zu lassen, wobei der 10 bis 16 Kohlenstoffatome enthaltende Alkohol in Mengen von 1 bis 10 Gewichtsprozent basierend auf der Zusammensetzung vorhanden ist.

5. Die Methode nach Anspruch 4, wobei die Mischung Partikel bildet, indem sie einer Spannung ausgesetzt wird, die ausreicht, um verteilte Partikel mit einem mittleren Größendurchmesser von 500 zu 1500 Å zu erzeugen.

6. Die Methode nach Anspruch 5, wobei die Spannung durch Aufprall von Flüssigkeit auf Flüssigkeit erzeugt wird.

7. Die Methode nach Anspruch 4, wobei die Mischung Partikel bildet durch eine Vorrichtung, die einen Homogenisator enthält.

8. Die Methode nach Anspruch 4, wobei die Mischung Partikel bildet, indem sie durch einen Mikrowirbelschichterzeuger geleitet wird.

9. Die Methode nach Anspruch 8, wobei die Mischung hergestellt wird durch Mischen der Kompomenten mit dem organischen Lösemittel, gefolgt von der Emulgierung der erhaltenen, löslich gemachten Mischung in Wasser in Gegenwartz eines Stabilisators.

10. Die Methode nach Anspruch 9, wobei das organische Lösemittel eine Mischung aus einem polaren und einem nichtpolaren Lösemittel ist.

11. Die Methode nach Anspruch 10, dadurch gekennzeichnet, daß der Stabilisator ein oberflächenaktiver Stoff ist, der aus einer Mischung eines anionischen und eines nichtionischen oberflächenaktiven Stoffes besteht.

12. Verwendung der wäßrigen Zusammensetzung nach einem der Ansprüche 1 bis 3 oder zubereitet nach einem der Ansprüche 4 bis 11 zur Behandlung eines porösen Substrats, um es wasserabstoßend zu machen, folgendes umfassend:
(I) Auftragen der oben spezifizierten wäßrigen Zusammensetzung auf das Substrat,
(II) Trocknen des besagten Substrats.

## Revendications

1. Une composition de traitement aqueux destiné à un substrat poreux sous forme d'une dispersion de l'huile dans l'eau comprenant :
(A) de 5 à 80 pour cent par poids d'une phase dispersée présentant un diamètre moyen de particules de 0,3 »m (3000 Å) maximum et contenant 5 à 90 pour cent par poids d'un solvant organique poreux pénétrant dans le substrat, de 1,5 à 90 pour cent par poids d'un matériau hydrofuge sélectionné dans le groupe comprenant un mélange de α-oléfine et/ou un mélange de paraffine ou au moins 50 % en poids du mélange d'oléfine ou du mélange de paraffine contient des composants possédant des atomes de carbone 20 à 24, de 0 à 20 pour cent d'un agent préservatif de substrat poreux, ou de 0,10 à 10 pour cent par poids d'un surfacteur anionique et/ou non anionique soluble à l'eau en combinaison avec un alcool contenant des atomes de carbone 10 à 16 et
(B) 20 à 95 pour cent par poids d'eau, où la quantité de la phase organique dispersée présente dans ladite composition de traitement aqueux ne suffit pas à induire la phase organique dispersée pour devenir une phase organique continue, où les atomes de carbone 10 à 16 contenant de l'alcool sont présents dans des proportions variant de 1 à 10 pour cent suivant la composition.

2. La composition de traitement aqueux de la revendication 1 capable de rendre un substrat de bois hydrofuge à un niveau d'au moins 40 % comme déterminé par NWMA-M-2-81, sauf que le temps d'immersion de ladite composition de traitement aqueux pour le NWMA-M-2-81 est de 30 secondes.

3. La composition de traitement aqueux de la revendication 1 comprenant 10 pour cent à 70 pour cent de ladite phase dispersée et 30 pour cent à 90 pour cent par poids d'eau, et pouvant également rendre un substrat de bois hydrofuge à un niveau d'au moins 50 %, comme déterminé par le NWMA-M-2-81 modifié, où le temps d'immersion de ladite composition aqueuse de traitement du bois est de 30 secondes.

4. Une méthode de préparation d'une composition de traitement aqueux pour un substrat poreux sous la forme d'une dispersion huile dans l'eau par mise en particules dans un milieu aqueux en présence d'un stabiliseur
(A) 5 à 80 pour cent par poids d'une phase jusqu'à un diamètre moyen de particules de 0,3 »m (3000 Å) et contenant un mélange de 10 à 90 pour cent par poids d'un solvant organique pénétrant dans un substrat poreux, de 1,5 à 90 pour cent par poids d'un matériau hydrofuge à l'eau sélectionné dans le groupe comprenant un mélange α-d'oléfine et/ou un mélange de paraffine où au moins 50 % par poids du mélange d'oléfine ou du mélange de paraffine comprend des composés contenant des atomes de carbone 20 à 24, de 0 à 20 pour cent par poids d'un agent préservatif de substrat poreux et de 0,10 à 10 pour cent par poids d'un surfacteur anionique et/ou non anionique soluble à l eau comme stabiliseur en combinaison avec un alcool contenant des atomes de carbone 10 à 16 et
(B) où le milieu aqueux est présent suivant des proportions variant de 20 à 95 pour cent par poids et où la quantité de la phase organique dispersée présente dans ladite composition de traitement aqueux ne suffit pas à transformer la phase organique dispersée en phase organique continue, et où les atomes de carbone 10-16 contenant de l'alcool sont présents dans des proportions variant de 1 à 10 pour cent par poids basé sur la composition.

5. La méthode de la revendication 4 caractérisée en ce que le mélange est mis en particules par soumission à une contrainte suffisante pour produire les particules disposées, présentant un diamètre moyen de 500 à 1500 Å.

6. La méthode de la revendication 5 caractérisée en ce que la contrainte est appliquée par la chute de gouttes liquide à liquide.

7. La méthode de la revendication 4 caractérisée en ce que le mélange est mis en particules par un moyen composé d'un homogénéiseur.

8. La méthode de la revendication 4 caractérisée en ce que le mélange est mis en particule par passage dans un microfluidiseur.

9. La méthode de la revendication 8 caractérisée en ce que le mélange est préparé en mélangeant les composants avec le solvant organique, puis en émulsifiant le mélange dissout obtenu dans l'eau, en présence d'un stabiliseur.

10. La méthode de la revendication 9 caractérisée en ce que le solvant organique est un mélange d'un solvant polaire et d'un solvant non polaire.

11. La méthode de la revendication 10 caractérisée en ce que le stabiliseur est un surfacteur composé d'un mélange d'un surfacteur anionique et d'un surfacteur non anionique.

12. L'utilisation de la composition aqueuse conformément à une des quelconques revendications 1 à 2, ou préparée conformément à une des quelconques revendications 4 à 11 pour le traitement d'un substrat poreux afin de le rendre hydrofuge, consistant
(I) à appliquer sur le substrat la composition aqueuse spécifiée ci-dessus,
(II) à sécher ledit substrat.
